# EUROPEAN PATENT SPECIFICATION

(11) **EP 4 020 105 B1**
(45) Date of publication and mention of the grant of the patent: **21.02.2024**
(21) Application number: 21214403.4
(22) Date of filing: 14.12.2021
(51) Int. Cl.: G05B 19/4099, A61C 13/00

(54) **METHOD FOR PRODUCING DENTAL PROSTHESIS**
VERFAHREN ZUR HERSTELLUNG EINER ZAHNPROTHESE
PROCÉDÉ DE PRODUCTION D'UNE PROTHÈSE DENTAIRE

(30) Priority: 23.12.2020 JP 2020213566
(43) Date of publication of application: 29.06.2022
(73) Proprietor: DGSHAPE Corporation, Hamamatsu-shi, Shizuoka 431-2103 (JP)
(72) Inventor: Maeda, Toshio, Shizuoka (JP)
(74) Representative: Grünecker Patent- und Rechtsanwälte PartG mbB

(56) References cited:
- EP-A1- 3 536 442
- US-A1- 2015 367 442
- US-A1- 2019 255 658

## Description

### BACKGROUND OF THE INVENTION

### 1. Field of the Invention

The present invention relates to a method for producing a dental prosthesis.

### 2. Description of the Related Art

Conventionally, a dental prosthesis production device processes a processing target made of a dental ceramic material, a dental resin material or the like into a desired shape to produce a dental prosthesis (for example, an artificial tooth, an artificial dental crown or the like). For example, Japanese Laid-Open Patent Publication No. 2020-183007 discloses a dental prosthesis production device that processes, for example, cuts and polishes, a processing target by use of a processing tool to produce a dental prosthesis.

In the case where a processing tool is used to cut a processing target as described in Japanese Laid-Open Patent Publication No. 2020-183007, the processing target having a certain shape (typically, a parallelepiped shape) needs to be cut into the shape of a dental prosthesis. Specifically, a portion of the processing target excluding the dental prosthesis needs to be cut away. This tends to cause the processing time to be extended.

EP3 536 442 A1 discloses a machining method for machining a material using a laser, the method including: a first machining step of forming an object inside the material by projection of the laser; and a second machining step of forming a cleavage site inside the material by projection of the laser towards outside a location in which the object has been formed.

US 2015/367442 A1 is directed to a method and apparatus for processing a transparent or semi-transparent material with a laser beam resulting in deterministic separation of a single sheet of the material into two or more pieces.

US 2019/255658 A1 discloses a method including: irradiating a processed portion of a light-transmittable material with laser light, and removing an unnecessary portion to form an object. When there are layered processed portions in an emission direction of the laser light, the layered processed portions are irradiated with the laser light in order from the processed portion furthest from a surface of the material which the laser light enters.

### SUMMARY OF THE INVENTION

Preferred embodiments of the present invention provide methods for producing a dental prosthesis in a shorter time period.

A preferred embodiment of the present invention provides a method according to claim 1.

According to the method according to the above-described preferred embodiment of the present invention, it is not necessary to cut and remove the entirety of a region of the processing target extending from the surface thereof to an outer circumference of a dental prosthesis. Therefore, the dental prosthesis may be produced in a shorter time period.

### BRIEF DESCRIPTION OF THE DRAWINGS

FIG. 1 is a flowchart showing a method for producing a dental prosthesis according to a preferred embodiment of the present invention.
FIG. 2 is a schematic view showing three-dimensional data on a processing target and a dental prosthesis according to a preferred embodiment of the present invention.
FIG. 3 is a schematic view showing three-dimensional data on a plurality of processing points representing an outer shape of the dental prosthesis according to a preferred embodiment of the present invention.
FIG. 4 is a schematic view showing three-dimensional data on a to-be-cut plane according to a preferred embodiment of the present invention.
FIG. 5 is a perspective view of the processing target attached to a securing pin according to a preferred embodiment of the present invention.
FIG. 6 is a schematic view of a processing device according to a preferred embodiment of the present invention.
FIG. 7 is a schematic view showing a state where the laser light is directed toward the processing target to create the processing points.
FIG. 8 is a schematic view showing a state where the laser light is directed toward the processing target to create processing planes.
FIG. 9 is a perspective view showing the positional relationship between the processing planes and the to-be-cut plane in the processing target.
FIG. 10 is a plan view showing the positional relationship between the processing planes and the to-be-cut plane in the processing target.
FIG. 11A is a schematic view of a processing plane according to a preferred embodiment of the present invention.
FIG. 11B is a schematic view showing a modification of a processing plane according to a preferred embodiment of the present invention.
FIG. 11C is a schematic view showing another modification of a processing plane according to a preferred embodiment of the present invention.
FIG. 12 is a schematic view showing a state where a processing target is cut along the to-be-cut plane.

### DETAILED DESCRIPTION OF THE PREFERRED EMBODIMENTS

Hereinafter, methods for producing a dental prosthesis according to preferred embodiments of the present invention will be described with reference to the drawings. The preferred embodiments described herein are not intended to specifically limit the present invention. Elements, portions and steps that have the same functions will bear the same reference signs, and overlapping descriptions will be omitted or simplified. In the drawings, letters F, Rr, L, R, U and D respectively represent front, rear, left, right, up and down. These directions are merely set for the sake of convenience, and are not to be interpreted as limiting the preferred embodiments in any way.

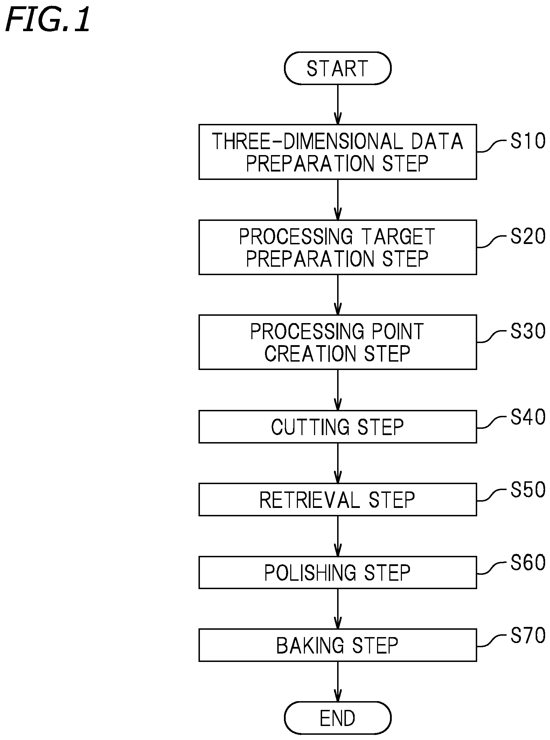

FIG. 1 is a flowchart showing a procedure of producing a dental prosthesis. According to the method (hereinafter, also referred to as a "dental prosthesis production method") in this preferred embodiment, a processing target that transmits laser light is processed by use of laser light, so that a dental prosthesis is produced. A dental prosthesis is an item fabricated for dental use. A dental prosthesis encompasses, for example, an artificial tooth and an artificial dental restoration item (e.g., crown, inlay, onlay, veneer, etc.). The dental prosthesis production method includes a three-dimensional data preparation step (step S10), a processing target preparation step (step S20), a processing point creation step (step S30), a cutting step (step S40), a retrieval step (step S50), a polishing step (step S60), and a baking step (step S70). The method may further include another step at any stage. The order of the three-dimensional data preparation step (step S10) and the processing target preparation step (step S20) may be opposite. Hereinafter, each of the steps will be described in detail.

First, in the three-dimensional data preparation step (step S10), three-dimensional data on a dental prosthesis is prepared. The three-dimensional data is, for example, STL (Standard Triangulated Language) data. The three-dimensional data on the dental prosthesis includes three-dimensional data representing an outer shape of the dental prosthesis, three-dimensional data representing an outer shape of a processing target, three-dimensional data representing processing points, and three-dimensional data representing processing planes. This step includes a preparation step (step S11) of preparing the three-dimensional data representing the outer shape of the dental prosthesis, a positioning step (step S12) of determining a position of the dental prosthesis with respect to the processing target, a first generation step (step S13) of generating the processing points, and a second generation step (step S14) of generating the processing planes. The three-dimensional data on the dental prosthesis is created by, for example, a computer-aided design device (CAD device). The CAD device may be realized in the form of software or hardware.

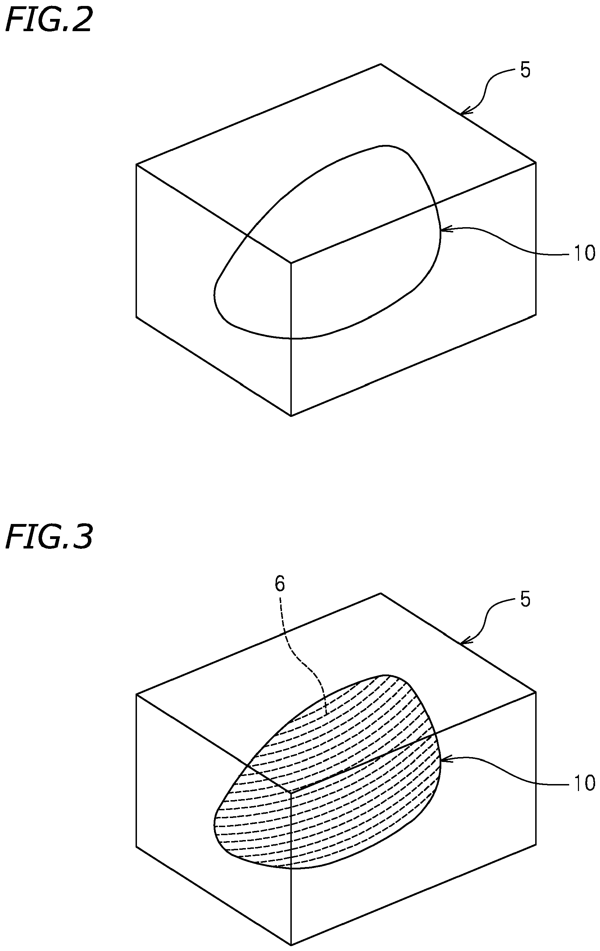

In step S11, the three-dimensional data representing the outer shape of the dental prosthesis is prepared. The three-dimensional data representing the outer shape of the dental prosthesis is used in the positioning step (step S12), the first generation step (step S13) and the second generation step (step S14). FIG. 2 shows an example of the three-dimensional data representing the outer shape of a dental prosthesis 10. The three-dimensional data representing the outer shape of the dental prosthesis 10 is usually created for each of patients. For a certain use or the like, an appropriate model of commercially available three-dimensional data may be used with no change as the three-dimensional data on the dental prosthesis 10.

In step S12, the position of the dental prosthesis 10 with respect to a processing target 5 is determined. First, the processing target 5 to be used is determined. Next, the position of the dental prosthesis 10 is determined such that the dental prosthesis 10 to be produced is accommodated in the processing target 5. The position of the dental prosthesis 10 may be automatically determined by the determination on the processing target 5 to be used.

In step S13, the three-dimensional data representing the outer shape of the dental prosthesis 10 is used to create data on a plurality of processing points 6 (see FIG. 3) representing the outer shape of the dental prosthesis 10. The data on the processing points 6 is used in the second generation step (step S14) and the processing point creation step (step S30). The plurality of processing points 6 are formed at such an interval that, for example, the laser light has an equal energy level per predetermined surface area among the plurality of processing points 6.

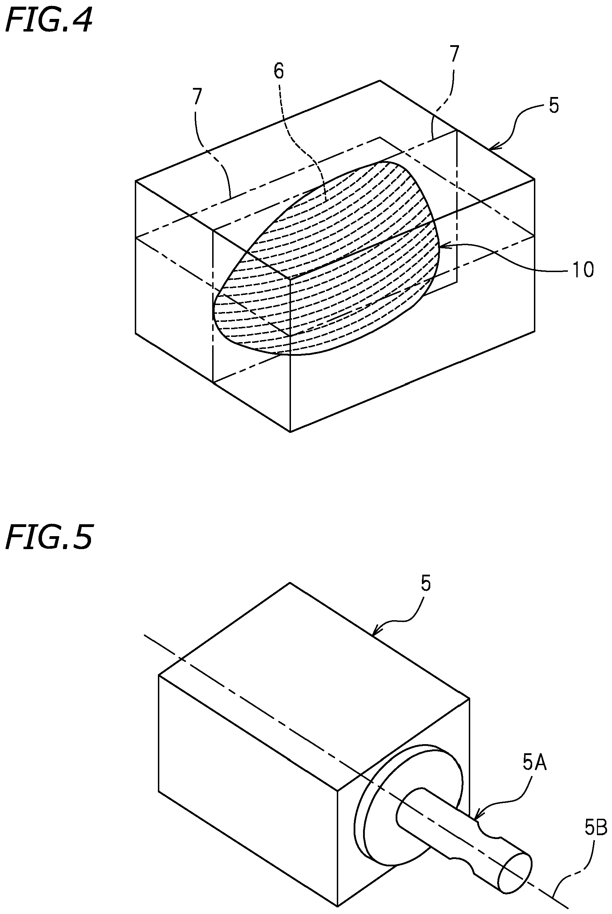

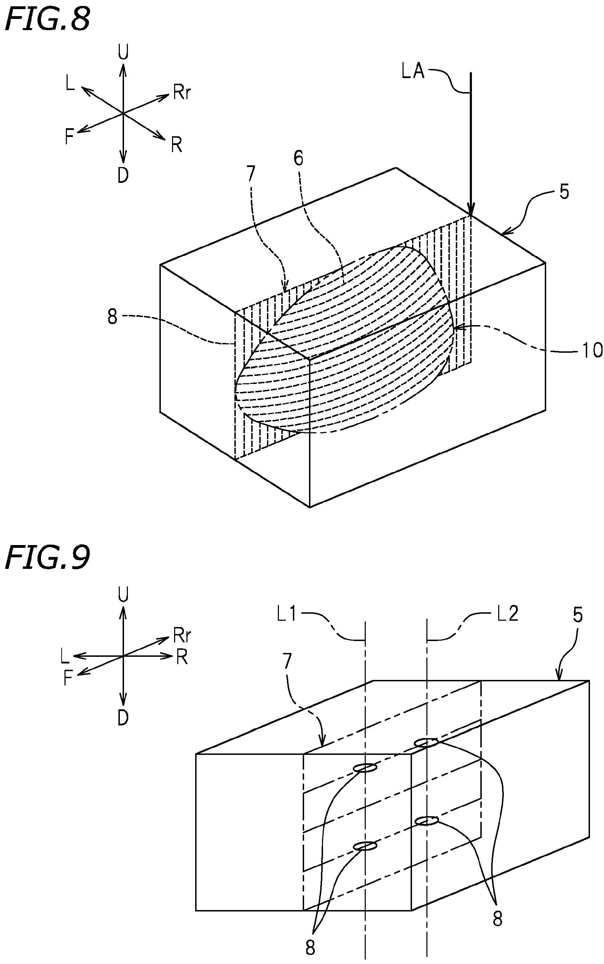

In step S14, the three-dimensional data representing the outer shape of the dental prosthesis 10 and the data on the processing points 6 are used to set a to-be-cut plane 7 or to-be-cut planes (see FIG. 4). The to-be-cut plane 7 extends from a surface of the processing target 5 to the processing points 6. Data on a plurality of processing planes 8 (see FIG. 9) located on the to-be-cut plane 7 and extending from the surface of the processing target 5 toward the processing points 6 is created. As described below, the processing planes 8 are created so as to cross the to-be-cut plane 7. The data on the processing planes 8 is used in the cutting step (step S40). The to-be-cut plane 7 is set so as to cross the dental prosthesis 10. The processing planes 8 are located at an interval wider than the interval between the processing points 6.

Next, in the processing target preparation step (step S20), the processing target 5 (see FIG. 5) is prepared. In this example, the processing target 5 determined in step S12 described above is prepared. As shown in FIG. 5, the processing target 5 preferably is block-shaped (e.g., cubic or parallelepiped) in this example. The processing target 5 may have another shape, for example, may be disc-shaped or the like. In the example shown in FIG. 5, a securing pin 5A is attached to the processing target 5. The processing target 5 is processed while being held by the securing pin 5A. The processing target 5 is made of a material that transmits laser light. The processing target 5 is, for example, colorless and transparent or colored and transparent. The processing target 5 is made of, for example, a glass ceramic material. The processing target 5 is not limited to being made of a glass ceramic material, and may be made of any material that transmits laser light.

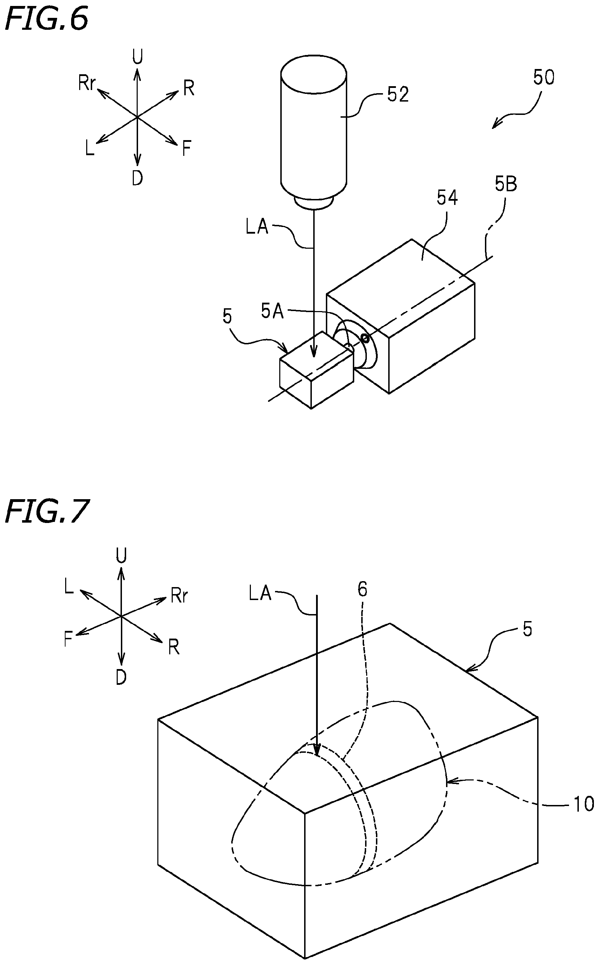

Next, in the processing point creation step (step S30), as shown in FIG. 7, the processing target 5 is irradiated with laser light LA based on the three-dimensional data on the dental prosthesis 10, so that the plurality of processing points 6 representing the outer shape of the dental prosthesis 10 are created in the processing target 5. In and around each of the processing points 6, gaps each smaller than a diameter of the processing point 6, internal quality-modified portions smaller than the processing point 6, or internal quality-modified portions larger than the processing point 6 are generated. The plurality of processing points 6 are formed at intervals such that the laser light LA has an equal energy level per predetermined surface area among the plurality of processing points 6. The processing points 6 each have a diameter shorter than a diameter of each of the processing planes 8. As shown in FIG. 8, the plurality of processing points 6 are created, so that the dental prosthesis 10 is formed in the processing target 5. There is no specific limitation on the order of creating the processing points 6. In this preferred embodiment, as shown in FIG. 6, a processing device 50 is used to process the processing target 5. In the processing point creation step (step S30), the processing target 5 is attached to the processing device 50 before being irradiated with the laser light LA. The processing device 50 includes a laser irradiator 52 providing the laser light LA and a support 54 supporting the processing target 5 such that the processing target 5 is rotatable. The laser irradiator 52 directs the laser LA toward the processing target 5. The laser light LA has a pulse width (pulse time) on the order of, for example, nanoseconds, picoseconds or femtoseconds. Laser light LA having a pulse width on the order of femtoseconds or picoseconds is ultrashort pulse laser light. Laser light LA having a pulse width on the order of nanoseconds is short pulse laser light. The laser irradiator 52 is, for example, movable in a left-right direction. The support 54 supports the securing pin 5A attached to the processing target 5. The support 54 is, for example, movable in a front-rear direction. The support 54 supports the processing target 5 such that the processing target 5 is rotatable about an axis 5B of the securing pin 5A.

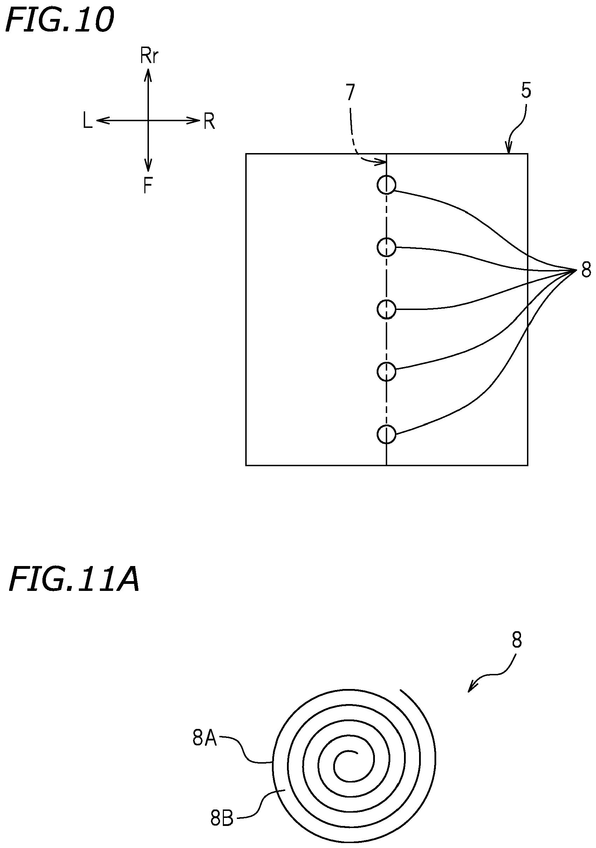

Next, in the cutting step (step S40), as shown in FIG. 8, the processing target 5 is irradiated with the laser light LA along the to-be-cut plane 7, so that a portion of the processing target 5 that is outward of the dental prosthesis 10 is cut with an internal stress. The expression "cut with an internal stress" indicates, for example, being cut by a difference in the change in the internal stress, the internal stress, or a difference in the internal stress remaining in the processing target 5. Such an internal stress or the like is caused by a gap generated in the processing target 5 or by an internal quality modification of, or a thermal influence on, the processing target 5. In this step, the processing target 5 is irradiated with the laser light LA, so that the plurality of processing planes 8 are created on the to-be-cut plane 7 so as to extend from the surface of the processing target 5 toward the processing points 6. The plurality of processing planes 8 are created on the to-be-cut plane 7 in this manner. As a result, the processing target 5 is cut with the internal stress with no crack or the like being made in the dental prosthesis 10. The processing planes 8 are formed to be, for example, generally circular. The processing planes 8 are not in contact with or connected to the processing points 6. As shown in FIG. 9, the processing planes 8 are formed on straight lines L1 and L2 on the to-be-cut plane 7. Preferably, the center of each of the processing planes 8 passes the straight line L1 or the straight line L2. The processing planes 8 may be diverted from the straight line L1 or the straight line L2. The processing planes 8 may be formed in a staggered manner. As shown in FIG. 10, the processing planes 8 extend in a direction crossing the to-be-cut plane 7. In this example, the processing planes 8 extend in a direction perpendicular to the to-be-cut plane 7. Specifically, the to-be-cut plane 7 extends in the front-rear direction and an up-down direction, whereas the processing planes 8 extend in the front-rear direction and the left-right direction. The processing planes 8 do not need to be perpendicular to the to-be-cut plane 7, and may be inclined with respect to the to-be-cut plane 7 at any angle. The to-be-cut plane 7 passes, for example, the center of each of the processing planes 8. The intervals between the processing planes 8 in the front-rear direction and the up-down direction are each wider than the interval between the processing points 6.

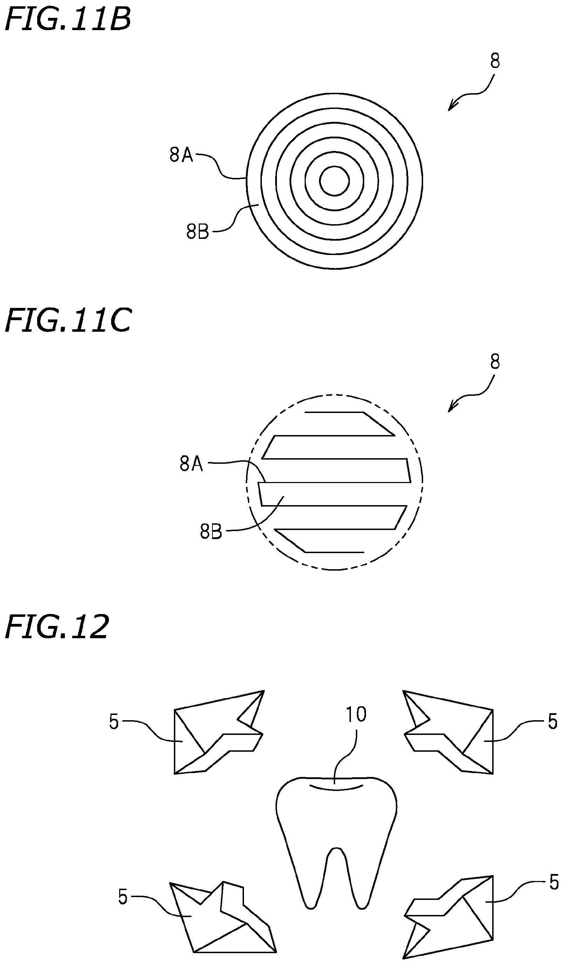

As shown in FIG. 11A, the processing planes 8 are formed to be spiral. Such spiral processing planes 8 are formed by irradiating the processing target 5 with the laser light LA spirally. The processing planes 8 are not limited to being spiral. As shown in FIG. 11B, the processing planes 8 may each be formed of concentric circles. The processing planes 8 may each be formed of, for example, concentric ellipses. Such processing planes 8 each formed of concentric circles or ellipses are formed by changing the diameter of rays of the laser light LA. The plurality of concentric circles or ellipses may be provided at an equal interval or different intervals. In the example shown in FIG. 11B, the plurality of concentric circles are similar to each other. The plurality of concentric circles do not need to be similar to each other. For example, as shown in FIG. 11C, the processing planes 8 may each be like a scanning line (like a generally zigzag line) extending in a direction crossing the to-be-cut plane 7. In this case, an outer profile of the scanning line may form a generally circular shape. The "scanning line" encompasses a plurality of lines crossing each other. The shape shown in each of FIGS. 11A to 11C are formed by directing the laser light LA toward a portion of each processing plane 8, which is generally circular, not toward the entirety of each processing plane 8. The processing planes 8 each include an irradiated portion 8A irradiated with the laser light LA and a non-irradiated portion 8B not irradiated with the laser light LA.

Next, in the retrieval step (step S50), an external force is applied to the processing target 5 to retrieve the dental prosthesis 10 cut from the processing target 5. For example, the processing target 5 is vibrated after the cutting step (step S40) to be completely cut. As a result, as shown in FIG. 12, the processing target 5 and the dental prosthesis 10 are completely separated from each other. In the case where the to-be-cut plane 7 is formed in an appropriate form in the cutting step (step S40), the processing target 5 and the dental prosthesis 10 may be completely separated from each other as shown in FIG. 12 with no need to vibrate the processing target 5. In this case, the retrieval step (step S50) may be omitted.

Next, in the polishing step (step S60), a surface of the dental prosthesis 10 is irradiated with the laser light LA to be polished. In this preferred embodiment, an unnecessary portion at the surface of the dental prosthesis 10 is removed by irradiation with the laser light. The same effect is obtained as in the case where the surface is polished by use of a common processing tool. In this step, for example, the dental prosthesis 10 is irradiated with the laser light LA while being held by a holding member (not shown). The laser irradiator 52 described above may be provided with the holding member, or a tool different from the laser irradiator 52 may be used, to direct the laser light LA toward the dental prosthesis 10.

Next, in the baking step (step S70), the dental prosthesis 10 is irradiated with the laser light LA to be baked. In this step, for example, the dental prosthesis 10 is irradiated with the laser light LA while being held by the holding member (not shown) described above. The laser irradiator 52 described above may be provided with the holding member, or a tool different from the laser irradiator 52 may be used, to direct the laser light LA toward the dental prosthesis 10. The same tool as that used in step S60 may be used.

As described above, according to the method in this preferred embodiment, in the processing point creation step (step S30), the processing target 5 is irradiated with the laser light LA based on the three-dimensional data, so that the plurality of processing points 6 representing the outer shape of the dental prosthesis 10 are created in the processing target 5. As a result, the dental prosthesis 10 is formed in the processing target 5. In the case where a processing tool is used to cut a processing target, it is necessary to cut and remove the entirety of a region of the processing target that extends from a surface thereof to an outer circumference of the dental prosthesis, in order to form the outer shape of the dental prosthesis. According to the method in this preferred embodiment, the processing target 5 transmitting the laser light LA is used. Therefore, the outer shape of the dental prosthesis 10 may be formed in the processing target 5 in a shorter time period with no removal of such a region. After this, in the cutting step (step S40), the processing target 5 is irradiated with the laser light LA along the to-be-cut plane 7 extending from the surface of the processing target 5 to the processing points 6, so that a portion of the processing target 5 that is outward of the dental prosthesis 10 is cut with an internal stress. The processing target 5 is irradiated with the laser light LA along the to-be-cut plane 7 in this manner. As a result, the processing target 5 is cut, and the dental prosthesis 10 formed in the processing target 5 may be retrieved. Since the processing target 5 may be cut by merely irradiating the processing target 5 with the laser light LA along the to-be-cut plane 7 in this preferred embodiment, the processing may be finished in a relatively short time period. The processing target made of a dental ceramic material, a dental resin material or the like is highly hard and highly brittle. Therefore, in the case where a processing tool is used to cut the processing target, the processing tool is abraded as a result of cutting the processing target, and thus tends to have a shorter life. Since the processing tool is exchanged more frequently, the production cost of the dental prosthesis may undesirably be raised. According to the method in this preferred embodiment, the processing target 5 is irradiated with the laser light LA to be processed. Therefore, there is no such problem that the processing tool is abraded as a result of contacting the processing target 5. This allows the dental prosthesis 10 to be produced more economically.

According to the method in this preferred embodiment, in the cutting step (step S40), the processing target 5 is irradiated with the laser light LA, so that the plurality of processing planes 8 are created on the to-be-cut plane 7 so as to extend from the surface of the processing target 5 toward the processing points 6. In this manner, the laser light LA is directed locally toward the to-be-cut plane 7 to create the plurality of processing planes 8. Therefore, the processing time period is shortened as compared with the case where an unnecessary portion of the processing target 5 is entirely removed. Since the processing planes 8 to be formed as a result of the processing have a smaller total area than that of the to-be-cut plane 7, the processing time period is shortened to a greater extent.

According to the method in this preferred embodiment, the processing planes 8 extend in a direction crossing the to-be-cut plane 7. Therefore, a portion of the processing target 5 that is located between each two processing planes 8 adjacent to each other is effectively cut with an internal stress.

According to the method in this preferred embodiment, the processing planes 8 are located at an interval that is wider than the interval between the processing points 6. Unlike the outer shape of the dental prosthesis 10, a cutting plane formed by the to-be-cut plane 7 does not need to be created highly precisely. Therefore, the laser light LA may be directed at a relatively long interval, as long as the processing target 5 may be cut. This allow the processing time period to be shortened.

According to the method in the invention, the processing planes 8 are each formed by irradiating the processing target 5 with the laser light LA spirally. Therefore, the processing target 5 is cut along the to-be-cut plane 7 with more certainty.

According to the method in the invention, the processing planes 8 are each formed by irradiating the processing target 5 with the laser light LA concentrically. Therefore, the processing target 5 is cut along the to-be-cut plane 7 with more certainty.

According to the method in this preferred embodiment, the processing planes 8 may each be formed by irradiating the processing target 5 with the laser light LA like a scanning line. Therefore, the processing target 5 is cut along the to-be-cut plane 7 with more certainty.

According to the method in this preferred embodiment, in the processing point creation step (step S30), the plurality of processing points 6 are formed at such an interval that the laser light LA has an equal energy level per predetermined surface area among the plurality of processing points 6. Therefore, during the formation of the outer shape of the dental prosthesis 10 in the processing target 5, the energy of the laser light LA is prevented from being locally concentrated due to the shape or the radius of curvature of the surface of the dental prosthesis 10. This reduces or prevents cracks in the dental prosthesis 10, for example.

The method in this preferred embodiment further includes the retrieval step (step S50) of, after the cutting step (step S40), applying an external force to the processing target 5 to retrieve the dental prosthesis 10 cut from the processing target 5. After the processing target 5 is cut in the cutting step (step S40), the dental prosthesis 10 is usually retrieved spontaneously. In the case where the dental prosthesis 10 has a certain shape or in the case where the processing target 5 is made of a certain material, it may occur that the dental prosthesis 10 cannot be retrieved immediately after the processing target 5 is cut. Even in such a case, the dental prosthesis 10 may easily be retrieved from the processing target 5 by applying an external force to the processing target 5 (for example, by vibrating the processing target 5).

According to the method in this preferred embodiment, the laser light LA has a pulse width on the order of nanoseconds, picoseconds or femtoseconds. In the case where the processing target 5 needs to be processed highly precisely, it is preferred that the laser light LA is ultrashort pulse laser light. With such laser light LA, the dental prosthesis 10 may be produced highly precisely in the processing target 5, and the processing target 5 may be cut highly precisely. The laser light LA may be short pulse laser light. In the case where the processing target 5 is made of a certain material, the processing time period of the processing target 5 may be shortened with such laser light LA.

The method in this preferred embodiment further includes the polishing step (step S60) of, after the cutting step (step S40), irradiating the surface of the dental prosthesis 10 with the laser light LA to polish the dental prosthesis 10. In the case where, for example, a processing tool is used, both of a processing tool for cutting and a processing tool for polishing need to be prepared. In this preferred embodiment, the laser light LA is used to polish the dental prosthesis 10. Therefore, no additional tool or the like is needed to polish the dental prosthesis 10.

The method in this preferred embodiment further includes the baking step (step S70) of, after the polishing step (step S60), irradiating the dental prosthesis 10 with the laser light LA to bake the dental prosthesis 10. In the case where a processing tool is used to produce the dental prosthesis 10, the dental prosthesis 10 needs to be baked by another baking device. In this preferred embodiment, heat of the laser light LA may be applied. Therefore, no baking device is needed to bake the dental prosthesis 10.

Some preferred embodiments of the present invention are described above. The above-described preferred embodiments are mere examples, and the present invention is set out in the appended set of claims.

In the above-described preferred embodiments, the baking step (step S70) is performed after the polishing step (step S60). The method may further include a quality modification step of modifying the quality of the dental prosthesis 10 between the polishing step (step S60) and the baking step (step S70) or between the processing point creation step (step S30) and the cutting step (step S40). In the quality modification step, the dental prosthesis 10 is irradiated with the laser light LA, and thus may be improved in, for example, the color development quality or the light transmission quality.

## Claims

1. A method for producing a dental prosthesis (10), comprising:
preparing (S10) three-dimensional data on the dental prosthesis (10);
preparing (S20) a processing target (5) that transmits laser light (LA);
setting (S13) processing points (6) representing an outer shape of the dental prosthesis (10) based on the three-dimensional data;
setting (S14) a to-be-cut plane (7) extending from a surface of the processing target (5) to the processing points (6);
creating (S30) the processing points (6) in the processing target (5) by irradiating the processing target (5) with the laser light (LA); and
cutting (S40) a portion of the processing target (5) that is outward of the dental prosthesis (10) with an internal stress by irradiating the processing target (5) with the laser light (LA) along the to-be-cut plane (7),
wherein the cutting (S40) includes creating processing planes (8) on the to-be-cut plane (7) by irradiating the processing target (5) with the laser light (LA), the processing planes (8) extending from the surface of the processing target (5) toward the processing points (6), and
wherein the processing planes (8) extend in a direction crossing the to-be-cut plane (7), and
the method being **characterised in that**
the processing planes (8) are each formed by irradiating the processing target (5) with the laser light (LA) spirally or concentrically.

2. The method according to claim 1, wherein the processing planes (8) are positioned at intervals that are wider than intervals between the processing points (6).

3. The method according to claim 1 or 2, wherein the processing planes (8) are each formed by irradiating the processing target (5) with the laser light (LA) forming a scanning line.

4. The method according to any one of claims 1 to 3, wherein in the creating of the processing points (6), the processing points (6) are formed at such intervals such that the laser light (LA) has an equal or substantially equal energy level per predetermined surface area among the processing points (6).

5. The method according to any one of claims 1 to 4, further comprising, after cutting the processing target (5), retrieving the dental prosthesis (10) cut from the processing target (5) by applying an external force to the processing target (5).

6. The method according to any one of claims 1 to 5, wherein the laser light (LA) has a pulse width on an order of nanoseconds, picoseconds or femtoseconds.

7. The method according to any one of claims 1 to 6, further comprising, after cutting the processing target (5), polishing the dental prosthesis (10) by irradiating the dental prosthesis (10) with the laser light (LA).

8. The method according to claim 7, further comprising, after polishing the dental prosthesis (10), baking the dental prosthesis (10) by irradiating the dental prosthesis (10) with the laser light (LA).

## Patentansprüche

1. Verfahren zur Herstellung eines Zahnersatzes (10), umfassend:
Erstellen (S10) von dreidimensionalen Daten des Zahnersatzes (10);
Vorbereiten (S20) eines Bearbeitungsziels (5), das Laserlicht (LA) durchlässt;
Festlegen (S13) von Bearbeitungspunkten (6), die eine äußere Form des Zahnersatzes (10) darstellen, basierend auf den dreidimensionalen Daten;
Festlegen (S14) einer zu schneidenden Ebene (7), die sich von einer Oberfläche des Bearbeitungsziels (5) zu den Bearbeitungspunkten (6) erstreckt;
Erzeugen (S30) der Bearbeitungspunkte (6) in dem Bearbeitungsziel (5) durch Bestrahlen des Bearbeitungsziels (5) mit dem Laserlicht (LA); und
Schneiden (S40) eines Abschnitts des Bearbeitungsziels (5), der sich außerhalb des Zahnersatzes (10) befindet, mit einer Eigenspannung durch Bestrahlen des Bearbeitungsziels (5) mit dem Laserlicht (LA) entlang der zu schneidenden Ebene (7),
wobei das Schneiden (S40) das Erzeugen von Bearbeitungsebenen (8) auf der zu schneidenden Ebene (7) durch Bestrahlen des Bearbeitungsziels (5) mit dem Laserlicht (LA) umfasst, wobei sich die Bearbeitungsebenen (8) von der Oberfläche des Bearbeitungsziels (5) in Richtung der Bearbeitungspunkte (6) erstrecken, und
wobei sich die Bearbeitungsebenen (8) in einer Richtung erstrecken, die die zu schneidende Ebene (7) kreuzt, und
wobei das Verfahren **dadurch gekennzeichnet ist, dass**
die Bearbeitungsebenen (8) jeweils durch spiralförmiges oder konzentrisches Bestrahlen des Bearbeitungsziels (5) mit dem Laserlicht (LA) gebildet werden.

2. Verfahren gemäß Anspruch 1, wobei die Bearbeitungsebenen (8) in Abständen angeordnet werden, die größer sind als die Abstände zwischen den Bearbeitungspunkten (6).

3. Verfahren gemäß Anspruch 1 oder 2, wobei die Bearbeitungsebenen (8) jeweils durch Bestrahlung des Bearbeitungsziels (5) mit dem Laserlicht (LA) unter Bildung einer Abtastlinie gebildet werden.

4. Verfahren gemäß einem der Ansprüche 1 bis 3, wobei bei der Erzeugung der Bearbeitungspunkte (6) die Bearbeitungspunkte (6) in solchen Abständen gebildet werden, dass das Laserlicht (LA) ein gleiches oder im Wesentlichen gleiches Energieniveau pro vorbestimmtem Flächenbereich unter den Bearbeitungspunkten (6) aufweist.

5. Verfahren gemäß einem der Ansprüche 1 bis 4, ferner umfassend:
nach dem Schneiden des Bearbeitungsziels (5), Herausholen des aus dem Bearbeitungsziel (5) geschnittenen Zahnersatzes (10) durch Aufbringen einer äußeren Kraft auf das Bearbeitungsziel (5).

6. Verfahren gemäß einem der Ansprüche 1 bis 5, wobei das Laserlicht (LA) eine Pulsbreite in der Größenordnung von Nanosekunden, Pikosekunden oder Femtosekunden aufweist.

7. Verfahren gemäß einem der Ansprüche 1 bis 6, ferner umfassend:
nach dem Schneiden des Bearbeitungsziels (5), Polieren des Zahnersatzes (10) durch Bestrahlung des Zahnersatzes (10) mit dem Laserlicht (LA).

8. Verfahren gemäß Anspruch 7, ferner umfassend:
nach dem Polieren des Zahnersatzes (10), Brennen des Zahnersatzes (10) durch Bestrahlen des Zahnersatzes (10) mit dem Laserlicht (LA).

## Revendications

1. Procédé de production d'une prothèse dentaire (10), comprenant :
la préparation (S10) de données tridimensionnelles sur la prothèse dentaire (10) ;
la préparation (S20) d'une cible de traitement (5) qui transmet de la lumière laser (LA) ;
la définition (S13) de points de traitement (6) représentant une forme externe de la prothèse dentaire (10) sur la base des données tridimensionnelles ;
la définition (S14) d'un plan à découper (7) qui s'étend depuis une surface de la cible de traitement (5) jusqu'aux points de traitement (6) ;
la création (S30) des points de traitement (6) dans la cible de traitement (5) en irradiant la cible de traitement (5) avec la lumière laser (LA) ; et
la découpe (S40) d'une portion de la cible de traitement (5) qui se trouve à l'extérieur de la prothèse dentaire (10) avec une contrainte interne en irradiant la cible de traitement (5) avec la lumière laser (LA) le long du plan à découper (7),
dans lequel la découpe (S40) comprend la création de plans de traitement (8) sur le plan à découper (7) en irradiant la cible de traitement (5) avec la lumière laser (LA), les plans de traitement (8) s'étendant depuis la surface de la cible de traitement (5) vers les points de traitement (6), et
dans lequel les plans de traitement (8) s'étendent dans une direction qui traverse le plan à découper (7),
le procédé étant **caractérisé en ce que** les plans de traitement (8) sont formés chacun en irradiant la cible de traitement (5) avec la lumière laser (LA) selon une spirale ou de manière concentrique.

2. Procédé selon la revendication 1, dans lequel les plans de traitement (8) sont positionnés à des intervalles qui sont plus larges que les intervalles entre les points de traitement (6).

3. Procédé selon la revendication 1 ou 2, dans lequel les plans de traitement (8) sont formés chacun en irradiant la cible de traitement (5) avec la lumière laser (LA) en formant une ligne de balayage.

4. Procédé selon l'une quelconque des revendications 1 à 3, dans lequel, lors de la création des points de traitement (6), les points de traitement (6) sont formés à des intervalles tels que la lumière laser (LA) possède un niveau d'énergie pour une surface prédéterminée qui est égal ou substantiellement égal parmi les points de traitement (6).

5. Procédé selon l'une quelconque des revendications 1 à 4, comprenant en outre, après avoir découpé la cible de traitement (5), la récupération de la prothèse dentaire (10) découpée dans la cible de traitement (5) en appliquant une force externe à la cible de traitement (5) .

6. Procédé selon l'une quelconque des revendications 1 à 5, dans lequel la lumière laser (LA) présente une largeur d'impulsion de l'ordre de la nanoseconde, de la picoseconde ou de la femtoseconde.

7. Procédé selon l'une quelconque des revendications 1 à 6, comprenant en outre, après la découpe de la cible de traitement (5), le polissage de la prothèse dentaire (10) en irradiant la lumière laser (LA) sur la prothèse dentaire (10).

8. Procédé selon la revendication 7, comprenant en outre, après le polissage de la prothèse dentaire (10), la cuisson de la prothèse dentaire (10) en irradiant la lumière laser (LA) sur la prothèse dentaire (10).
